# EUROPÄISCHE PATENTANMELDUNG

(11) **EP 0 749 686 A2**
(43) Veröffentlichungstag der Anmeldung: **27.12.1996**
(21) Anmeldenummer: 96109605.4
(22) Anmeldetag: 14.06.1996
(51) Int. Cl.: A01K 3/00, E04H 17/08

(54) **Weidezaunpfahl**

(30) Priorität: 20.06.1995 DE 29509654 U
(71) Anmelder: Horizont Gerätewerk GmbH, D-34497 Korbach (DE)
(72) Erfinder: Weinreich, Wilhelm, 34497 Korbach (DE)
(74) Vertreter: Fuchs, Luderschmidt & Partner

(57) **Zusammenfassung**

Es wird ein Zaunpfahl für Elektrozäune auf Viehweiden beschrieben. Dieser besteht aus einem länglichen Kunststoff-Grundkörper (1) mit integriertem dornartigen, metallischen Steckfuß (2), mit in unterschiedlichen Höhen längs der Grundkörperachse befindlichen Halterungen für umzäunende Leiterelemente in Form von C-förmigen Bügeln (3), die mit einem Ende am Grundkörper angebracht sind und mit dem freien Ende zu diesem Körper hin abgewinkelt sind, und die im Zusammenwirken mit dem Grundkörper eine sichernde Halterung für das Leiterelement vorgeben und mit einer Fußleiste (4) zum Einbringen des Steckfußes (2) in das Erdreich.

Es wird vorgeschlagen, daß jeweils zwei gleichartige, je eine sichernde Halterung vorgebende Bügel (3) in gleicher Höhe auf gegenüberliegenden Seiten des Kunststoffpfostens (1) angebracht sind.

## Beschreibung

Die Erfindung betrifft einen Zaunpfahl für Elektrozäune auf Viehweiden, bestehend aus einem länglichen Kunststoff-Grundkörper mit integriertem dornartigen, metallischen Steckfuß, mit in unterschiedlichen Höhen längs der Grundkörperachse befindlichen Halterungen für umzäunende Leiterelemente in Form von C-förmigen Bügeln, die mit einem Ende am Grundkörper angebracht sind und mit dem freien Ende zu diesem Körper hin abgewinkelt sind, und die im Zusammenwirken mit dem Grundkörper eine sichernde Halterung für das Leiterelement vorgeben und mit einer Fußleiste zum Einbringen des Steckfußes in das Erdreich. Dabei können die Leiterelemente in Form von Bändern, Drähten, Litzen und Seilen Verwendung finden.

Derartige Zaunpfähle sind als Produkt auf dem Markt erhältlich und gehören damit zum vorbekannten Stand der Technik.

Der bekannte Zaunpfahl weist einen als Rechteckprofil mit Ausnehmungen ausgebildeten Pfosten als Kunststoff-Grundkörper auf, an dem auf der einen Seite die C-förmigen Bügel angebracht sind. Da die Bügel jeweils nur auf der einen Seite des Pfostens angeordnet sind, ist jeweils nur eine einzige sichernde Führung des Leiterelementes gegeben. Dadurch kann es leicht vorkommen, daß die Leiterelemente aus ihrer Halterung herausfallen, um dann in den ungünstigen Fällen auf die Erde zu fallen, so daß dann die elektrische Energie nutzlos in die Erde eingeleitet wird.

Das Herausfallen kann beispielsweise dadurch geschehen, daß der Pfahl bei Wind oder unter Last (nach Regenfällen und mit Wasser vollgesogenen Leiterelementen) verdreht wird, so daß das Leiterelement nur durch eine leichte Bewegung nach oben aus der Bügel-Halterung herausgeführt werden kann.

Der Erfindung liegt daher die Aufgabe zugrunde, den eingangs bezeichneten Zaunpfahl so auszubilden, daß eine hohe Sicherheit gegen ein zufälliges Herausfallen des Leiterelementes in jeglicher Form aus den Halterungen gegeben ist, das Einlegen und gewollte Herausnehmen des Leiterelementes dennoch einfach ist.

Die Lösung dieser Aufgabe gelingt gemäß der Erfindung dadurch, daß jeweils zwei gleichartige, je eine sichernde Halterung vorgebende Bügel in gleicher Höhe auf gegenüberliegenden Seiten des Kunststoffpfostens angebracht sind.

Alternativ gelingt die Lösung gemäß der Erfindung dadurch, daß die Bügel längs der Achse zwischen zwei, den Grundkörper bildenden Rahmenwänden angebracht sind, und jeweils mit jeder Rahmenwand je eine sichernde Halterung bilden.

Durch die erfindungsgemäße Ausbildung und Anordnung der Halterungen ist somit eine doppelte Sicherung gegeben, so daß die Sicherheit gegen ein zufälliges Herausfallen des Leiterelementes aus den Halterungen maßgeblich erhöht ist.

Ein Weidezaunpfahl mit einem länglichen Kunststoff-Grundkörper und integriertem dornartigen, metallischen Steckfuß, mit einer angeformten Fußleiste und mit in unterschiedlichen Höhen längs der Grundkörperachse befindlichen Halterungen für das umzäunende Leiterelement, die jeweils eine Doppelführung für das Leiterband vorgeben, ist durch die DE-89 05 991.3 vorbekannt. Im bekannten Fall besteht die Halterung jeweils aus einer am Grundkörper angeformten Schneide mit einer kopfseitigen Abkröpfung, die mit einem ebenfalls am Grundkörper angeformten hahnartigen Fortsatz eine gesicherte Halterung für ein Leiterseil vorgibt, sowie aus zwei, auf je einer Seite der Schneide beabstandet angeordnete Pfosten, die im Zusammenwirken mit der Schneide eine Doppel-Halterung für ein Leiterband vorgeben. Diese bekannte Ausbildung der Halterungen ist zunächst fertigungstechnisch sehr aufwendig. Sie benötigt zudem unterschiedliche Halterungen für die einzelnen oben erwähnten Typen der Leiterelemente. Trotz der Doppelführung des Leiterbandes ist die bekannte Band-Halterung nicht gegen ein zufälliges Herausrutschen des Bandes sicher, da der Raum zwischen Pfosten und Schneide oben offen ist.

Nach einer Ausgestaltung der Erfindung erreicht man eine besonders sichere Halterung des Leiterelementes dadurch, daß die freien Schenkel der Bügel sich mindestens bis zur rückwärtigen Kante des Grundkörpers erstrecken.

Weitere vorteilhafte Weiterbildungen ergeben sich im übrigen aus den Unteransprüchen.

Weitere ausgestaltende Merkmale der Erfindung ergeben sich anhand der nachfolgenden Beschreibung von zwei in den Zeichnungen dargestellten Ausführungsformen. Es zeigen:
- Fig. 1: in einer frontseitigen und rückwärtigen Ansicht einen Weidezaunpfahl mit einem Kunststoffpfosten als Grundkörper, bei dem zwei schlaufenartige Halterungen unter Bildung einer Doppelführung den Pfosten umgreifen,
- Fig. 2: in einer im wesentlichen frontseitigen Ansicht einen Weidezaunpfahl mit einem Doppel-Rahmen als Grundkörper, bei dem die Rahmenwände eine dazwischen befindliche, schlaufenartige Halterung unter Bildung einer Doppelführung umschließen,
- Fig. 3: in einer frontseitigen und rückwärtigen Ansicht eine Variante eines Weidezaunpfahles nach dem Prinzip der Ausführung nach Fig. 2 mit schmalem Rahmen.
- Fig. 4: einen vergrößerten Ausschnitt aus Fig. 1 im Bereich eines Halterungspaares, wobei die Halte- und Sicherungsbügel gleichsinnig am Grundkörper angebracht sind,
- Fig. 5: einen vergrößerten Ausschnitt aus Fig. 1 im Bereich eines Halterungspaares, wobei die Halte- und Sicherungsbügel gegensinnig am Grundkörper angebracht sind.

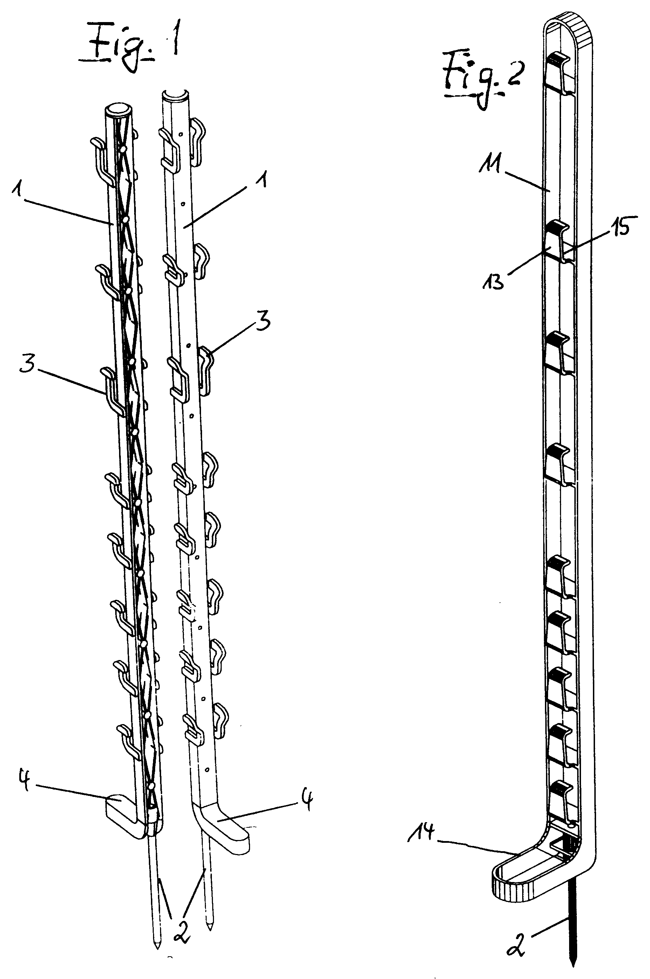

Die Fig. 1 zeigt einen Zaunpfahl für Elektrozäune auf Viehweiden mit einem länglichen Kunststoff-Grundkörper 1, der im Ausführungsbeispiel als Pfosten mit Rechteckprofil ausgebildet ist, das Ausnehmungen aufweist. Mit diesem Grundkörper 1 ist ein dornartiger, metallischer Steckfuß 2 verbunden, der zum Einstecken des Zaunpfahles in das Erdreich dient. Längs der Grundkörperachse sind in unterschiedlichen Höhen bügelartige Halterungen 3 für die im Betrieb unter elektrischer Spannung stehenden, die Umzäunung vorgebenden (nicht dargestellten) Leiterelemente angebracht. Solche auf dem Fachgebiet verfügbaren Leiterelemente können sein: Seile, Litzen, Drähte, schmale Bänder mit einer Breite im Bereich von 10-20 mm und breite Bänder mit einer Breite von 40 mm. Diese bügelartigen Halterungen 3 geben im Zusammenwirken mit dem Grundkörper eine sichernde Führung und Fixierung (Anlage) für das Leiterelement vor. An dem Grundkörper ist weiterhin eine Fußleiste 4 angebracht, mittels derer der Steckfuß des Pfahles durch Fußkraft in das Erdreich gesteckt werden kann.

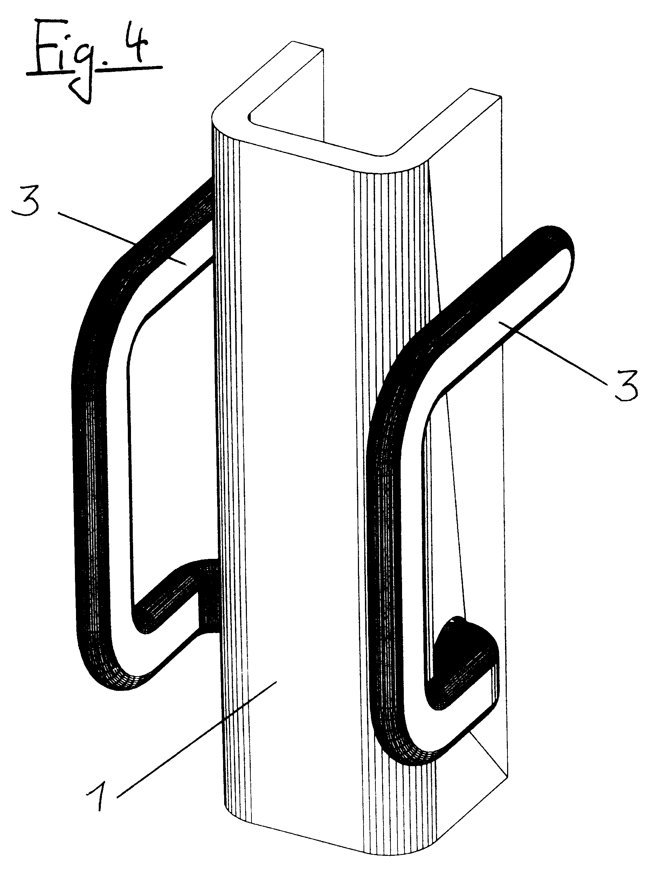

Bei der Ausführungsform nach Fig. 1 sind zur Realisierung der erfindungsgemäßen Doppelsicherung jeweils zwei gleichartige Halterungen 3 auf gegenüberliegenden Seiten des Pfostens 1 angebracht. Diese Halterungen weisen die Form eines C-förmigen Bügels auf. Ein Ende des Bügels ist am Grundkörper angebracht, insbesondere einstückig angeformt. Das andere, freie Ende des Bügels ist zum Grundkörper hin abgewinkelt und fungiert als Sicherungsschenkel. Das freie Ende erstreckt sich vorzugsweise mindestens bis zur rückwärtigen Kante des Grundkörpers. In der dargestellten Form sind beide Bügel eines Paares gleichsinnig, d. h. mit gegenüberliegenden Enden angeformt. Eine derartige Ausführung zeigt auch die Fig. 4.

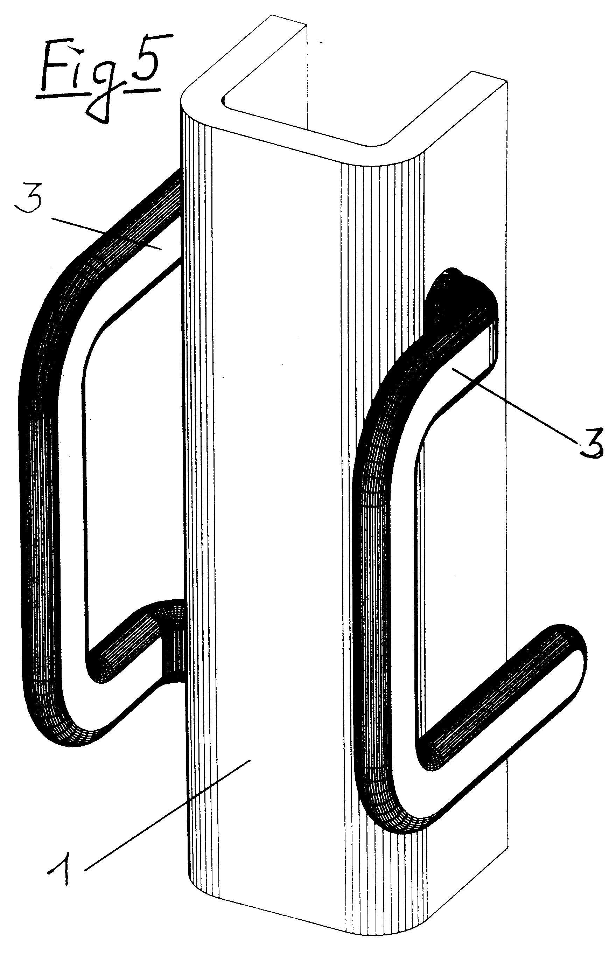

Es ist auch eine Ausführung denkbar, bei der die beiden Bügel eines Paares gegensinnig, d. h. mit nicht gegenüberliegenden Enden angeformt sind. Diese Ausführung zeigt Fig. 5.

Aus der Fig. 1 ist erkennbar, daß Bügelpaare in Anpassung an unterschiedliche Typen von Leiterelementen unterschiedlich groß ausgebildet sein können. Dadurch können Leiterelemente der unterschiedlichsten Art aufgenommen werden. Die unterschiedliche Größe ist allerdings nicht zwingend, damit unterschiedliche Typen der Leiterelemente sicher gehalten werden können. Dafür ist entscheidend die Ausformung der Bügel 3 und deren doppelte Anbringung am Pfahl. Der Weidezaunpfahl ist daher universell einsetzbar.

Die Fußleiste 4 ist vorzugsweise auf derjenigen Seite des Kunststoff-Grundkörpers angebracht, welche die Zaunaußenseite bildet. Da der Zaunpfahl bei nassem Leiterband zum Kippen in die Richtung nach der Zaunaußenseite neigt, dient somit die Fußleiste selbst als Hindernis gegen ein Kippen des Pfahles nach vorne selbst bei nassem Leiterband oder bei Bewuchs durch Blätter etc..

Bei dem Ausführungsbeispiel nach Fig. 2 ist der Grundkörper als Doppel-Rahmen 11 ausgebildet. Zwischen den beiden Rahmenwänden sind mehrere Stege 15 in unterschiedlichen Höhen angebracht, an denen jeweils eine aus der Rahmenebene herausragende bügelartige Halterung 13 angebracht ist. Die Bügelkanten bilden mit der zugeordneten Rahmenwand dabei eine sichernde Halterung, wodurch die erfindungsgemäße Doppelsicherung erzielbar ist. Der Zaunpfahl nach Fig. 2 besitzt ebenfalls eine in Richtung Zaunaußenseite angebrachte, hier angeformte Fußleiste 14 mit den im Zusammenhang mit der Fig. 1 erläuterten Vorteilen.

Auch bei der Ausführung nach Fig. 2 können die Bügel, wie in Fig. 1 in Anpassung an unterschiedliche Leiterelemente unterschiedlich groß ausgebildet sein. Auch dies ist - wie bei der Ausführung nach Fig. 1 - nicht zwingend.

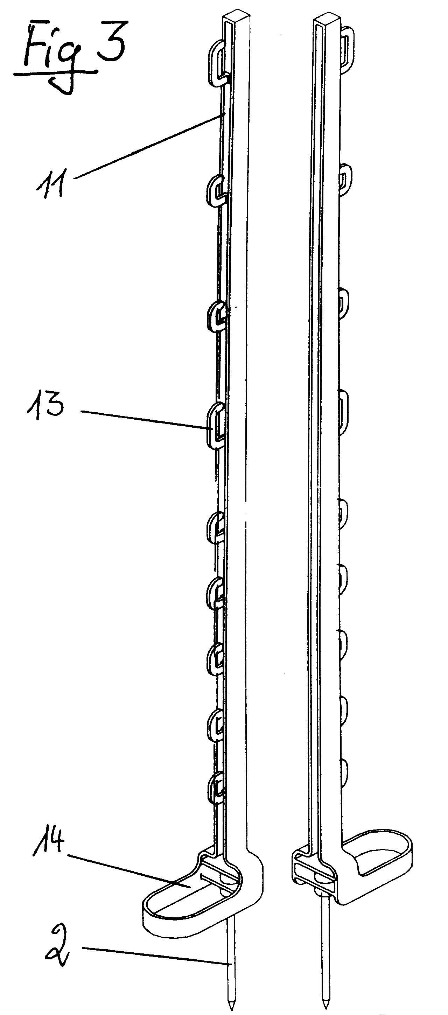

In Fig. 3 ist eine Variante eines Weidezaunpfahles nach dem Prinzip der Fig. 2 mit einem Doppel-Rahmen 11 als Pfählgrundkörper dargestellt, der sich von der Ausführung nach Fig. 2 im wesentlichen durch einen schmäleren Abstand der Rahmenwände, unterscheidet. Dadurch entfällt die Notwendigkeit der Anordnung eines gesonderten Steges. Die feste Verbindung zwischen den Rahmenwänden wird über die Bügel 13 selbst hergestellt. Deren Wandstärke entspricht der Rahmenbreite.

In der Fig. 3 sind, wie erkennbar, die Bügel 13 in Anpassung an unterschiedliche Leiterelemente unterschiedlich groß ausgebildet. Auch bei der Ausführung nach Fig. 3 besitzt der Zaunpfahl eine rahmenförmig gestaltete Fußleiste 14, die integral mit dem Doppel-Rahmen 11 verbunden ist, sowie einen metallischen Dorn 2 als Steckfuß.

Die Bügel können bei allen Ausführungen entweder als Kunststoffteile integral an dem Kunststoffgrundkörper angeformt sein oder können separate Kunststoffteile sein, die mechanisch mit dem Grundkörper bzw. den Stegen zwischen dem Doppel-Rahmen verbunden, insbesondere verschraubt sind.

Der erfindungsgemäße Weidezaunpfahl ist mit Vorteil insgesamt einstückig als Kunststoff-Spritzgießteil herstellbar.

## Patentansprüche

1. Zaunpfahl für Elektrozäune auf Viehweiden, bestehend aus einem länglichen Kunststoff-Grundkörper (1, 11) mit integriertem dornartigen, metallischen Steckfuß (2), mit in unterschiedlichen Höhen längs der Grundkörperachse befindlichen Halterungen für umzäunende Leiterelemente in Form von C-förmigen Bügeln (3, 13), die mit einem Ende am Grundkörper angebracht sind und mit dem freien Ende zu diesem Körper hin abgewinkelt sind, und die im Zusammenwirken mit dem Grundkörper eine sichernde Halterung für das Leiterelement vorgeben und mit einer Fußleiste (4, 14) zum Einbringen des Steckfußes (2) in das Erdreich,
dadurch gekennzeichnet,
daß jeweils zwei gleichartige, je eine sichernde Halterung vorgebende Bügel (3) in gleicher Höhe auf gegenüberliegenden Seiten des Kunststoffpfostens (1) angebracht sind (Fig. 1).

2. Zaunpfahl für Elektrozäune auf Viehweiden, bestehend aus einem länglichen Kunststoff-Grundkörper (1, 11) mit integriertem dornartigen, metallischen Steckfuß (2), mit in unterschiedlichen Höhen längs der Grundkörperachse befindlichen Halterungen für umzäunenden Leiterelemente in Form von C-förmigen Bügeln (3, 13) mit einem Ende am Grundkörper angebracht sind und mit dem freien Ende zu diesem Körper hin abgewinkelt sind und die im Zusammenwirken mit dem Grundkörper eine sichernde Halterung für das Leiterelement vorgeben und mit einer Fußleiste (4, 14) zum Einbringen des Steckfußes (2) in das Erdreich, dadurch gekennzeichnet, daß die Bügel (13) längs der Achse zwischen zwei, den Grundkörper (11) bildenden Rahmenwänden angebracht sind, und jeweils mit jeder Rahmenwand je eine sichernde Halterung bilden (Fig. 2, 3).

3. Zaunpfahl nach Anspruch 1 oder 2, dadurch gekennzeichnet, daß die freien Schenkel der Bügel (3, 13) sich mindestens bis zur rückwärtigen Kante des Grundkörpers (1, 11) erstrecken.

4. Zaunpfahl nach Anspruch 2 oder 3, dadurch gekennzeichnet, daß die Bügel (13) jeweils an einem Steg (15) angebracht sind, der sich zwischen den Rahmenwänden erstreckt (Fig. 2).

5. Zaunpfahl nach Anspruch 1 oder 3, dadurch gekennzeichnet, daß zumindest teilweise bei zwei auf gleicher Höhe befindlichen Bügeln (3) die sich gegenüberliegenden Enden des Bügelpaares am Grundkörper (1) angebracht sind (Fig. 4).

6. Zaunpfahl nach Anspruch 1 oder 3, dadurch gekennzeichnet, daß zumindest teilweise bei zwei auf gleicher Höhe befindlichen Bügeln (3) die sich nicht gegenüberliegenden Enden des Bügelpaares am Grundkörper (1) angebracht sind (Fig. 5).

7. Zaunpfahl nach mindestens einem der Ansprüche 1 bis 6, dadurch gekennzeichnet, daß längs der Pfahlachse unterschiedlich groß ausgebildete Bügel (3) für unterschiedliche Typen von Leiterelementen angebracht sind.

8. Zaunpfahl nach mindestens einem der Ansprüche 1 bis 7, dadurch gekennzeichnet, daß die Fußleiste (4, 14) auf derjenigen Seite des Kunststoff-Grundkörpers (1) angebracht, vorzugsweise angeformt ist, welche die Zaunaußenseite bildet.

9. Zaunpfahl nach mindestens einem der Ansprüche 1 bis 8, dadurch gekennzeichnet, daß die Bügel (3, 13) integral an dem Kunststoffgrundkörper (1) angeformt sind.

10. Zaunpfahl nach einem der Ansprüche 1 bis 8, dadurch gekennzeichnet, daß die Bügel (3, 13) separate Kunststoffteile sind, die mechanisch mit dem Kunststoffgrundkörper (1) verbunden, insbesondere verschraubt sind.
